# EUROPÄISCHE PATENTSCHRIFT

(11) **EP 0 827 580 B1**
(45) Veröffentlichungstag und Bekanntmachung des Hinweises auf die Patenterteilung: **04.08.1999**
(21) Anmeldenummer: 96916007.6
(22) Anmeldetag: 06.06.1996
(51) Int. Cl.: F16J 15/08

(54) **VORRICHTUNG ZUR ABDICHTUNG ZWISCHEN BEWEGLICHEN ANLAGENTEILEN**
SEALING DEVICE BETWEEN MOVABLE PARTS IN MUTUAL CONTACT
DISPOSITIF ASSURANT L'ETANCHEITE ENTRE DES PARTIES MOBILES EN CONTACT MUTUEL

(30) Priorität: 09.06.1995 DE 19521916
(43) Veröffentlichungstag der Anmeldung: 11.03.1998
(73) Patentinhaber: MANNESMANN Aktiengesellschaft, 40213 Düsseldorf (DE)
(72) Erfinder: STARKE, Wilfried, D-59320 Enningerloh (DE)
(74) Vertreter: Meissner, Peter E., Dipl.-Ing.
(86) Internationale Anmeldenummer: DE9601043
(87) Internationale Veröffentlichungsnummer: WO9641980

(56) Entgegenhaltungen:
- EP-A- 0 526 748
- DE-A- 4 322 806
- US-A- 4 660 805

## Beschreibung

Die Erfindung betrifft eine Vorrichtung zur Abdichtung zwischen zwei relativ zueinander beweglichen Anlagenteilen gemäß dem Gattungsbegriff des Patentanspruchs 1.

Aus der DE 38 15 402 A1 ist eine Vorrichtung zur Abdichtung der Berührungszone zwischen einem beweglichen Absperrelement einer Rohrleitung und einem ortsfesten Sitz bekannt, bei dem im Dichtungsbereich eine elastische Dichtung in Form eines langgestreckten Federstahlblechstreifens verwendet wird. Der Federstahlblechstreifen weist außerhalb der gewölbten Dichtungszone in Längsrichtung des Dichtungselements zwei Abwinkelungen auf. Die beiden Längskantenbereiche des Federstahlblechstreifens weisen zur selben Seite und sind im Sinne von Spannrändern übereinandergelegt und mittels einer Klemmeinrichtung (z.B. Schraubverbindung) einseitig an dem beweglichen Absperrelement oder an dem feststehenden Dichtsitz befestigbar. Insbesondere in Fällen, in denen während des Schließvorgangs die Relativbewegung zwischen dem Federstahlblechstreifen und dem Gegendichtsitz etwa senkrecht zur bogenförmig gekrümmten Dichtungszone verläuft, hat sich diese Dichtung sehr gut bewährt. In Fällen, in denen die Relativbewegung beim Schließen mehr tangential zur bogenförmig gewölbten Dichtungszone ausgeführt werden muß, kommt es gelegentlich zu extremen Belastungssituationen für die Federstahldichtung, die zu einem Abheben des Federstahlblechstreifens von der Auflagefläche und als Folge davon zu einem Bruch des Federstahlblechstreifens führen können.

Um derartige negative Folgen zu vermeiden, ist es aus der WO 95/02136 bekannt, im Inneren des Dichtungselementes ein Stützprofil vorzusehen, das im Sinne eines Niederhalters nahe der von der Einspannstelle am weitesten entfernten Abwinkelung auf der Auflagefläche des Federstahlblechstreifens anliegt und ein Abheben verhindert. Der Niederhalter kann beispielsweise als etwa V-förmiges Profil ausgebildet sein und wird zwischen den Spannrändem des Federstahlblechstreifens durch die einseitig angebrachte Klemmvorrichtung mit befestigt. Da der Niederhalter wegen der in Rauchgasarmaturen vielfach auftretenden außerordentlich korrosiven Bedingungen ebenso wie der Federstahlblechstreifen aus hochlegiertem Material bestehen muß, ist der Kostenaufwand hierfür beträchtlich. Hinzu kommt der Nachteil, daß das Losbrechmoment beim Öffnen einer mit dem bekannten Dichtelement ausgerüsteten großflächigen Rauchgasklappe bedingt durch den Niederhalter unerwünscht hoch sein kann.

Aufgabe der Erfindung ist es, eine gattungsgemäße Vorrichtung dahingehend weiterzubilden, daß ein unzulässiges Abheben und Verformen des Federstahlblechstreifens durch tangentiale Schiebekräfte beim Erreichen der Schließstellung mit möglichst geringem Material- und Montageaufwand sicher vermieden werden kann, ohne daß die erforderliche elastische Verformbarkeit des Dichtungselements unzulässig beeinträchtigt wird; vielmehr soll die Abdichtung eine flexiblere, d.h. weichere Charakteristik aufweisen, um eine Reduzierung des Losbrechmomentes zu erreichen.

Gelöst wird diese Aufgabe durch eine Vorrichtung mit den Merkmalen des Patentanspruchs 1. Vorteilhafte Weiterbildungen der Erfindung sind in den Unteransprüchen 2 bis 7 angegeben.

Die Erfindung wird anhand der Figuren näher erläutert. Es zeigen:
- Fig. 1: einen Querschnitt durch eine erfindungsgemäße Abdichtungsvorrichtung mit L-Profil als Stützelement und eingezeichneten Verformungslinien,
- Fig. 2: einen Querschnitt durch eine Abdichtungsvorrichtung gemäß Fig. 1 mit zusätzlichem Unterlegelement,
- Fig. 3: einen Querschnitt durch eine erfindungsgemäße Abdichtungsvorrichtung mit Halteblechstreifen als Stützelement,
- Fig. 4: eine bekannte Dichtungsanordnung.

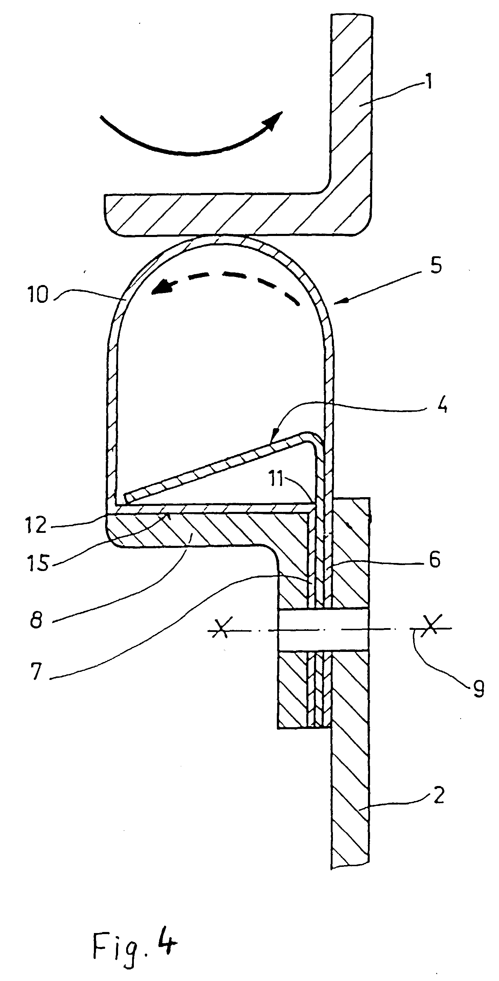

Eine nach dem bisherigen Stand der Technik gemäß WO 95/02136 gestaltete Dichtungsanordnung geht aus Fig. 4 hervor. Die beiden gegeneinander abzudichtenden Anlagenteile, die relativ zueinander bewegt werden, sind mit den Bezugszeichen 1 und 2 bezeichnet. Es kann sich hierbei z.B. um eine Absperrklappe 1 handeln, die etwa tangential in ihre Dichtposition relativ zum feststehenden Anlagenteil 2 mit dem Federstahlblechstreifen 5 eingeschwenkt wird, was durch den oberen gebogenen Pfeil angedeutet wird. Der Federstahlblechstreifen 5 könnte selbstverständlich auch alternativ an dem bewegten Anlagenteil befestigt sein. Dies ist durch den unteren gestrichelt gezeichneten gebogenen Pfeil angedeutet. Selbstverständlich ist es auch möglich, beide relativ zueinander bewegten Anlagenteile mit entsprechenden Federstahlblechstreifen 5 auszustatten. Vielfach werden auch, wie dies bei Jalousieklappen der Fall ist, zwei unmittelbar benachbarte Klappenflügel in die Schließstellung gebracht, d.h. daß beide Anlagenteile 1, 2 gleichzeitig bewegt werden. Dabei treten neben den Normalkräften (Dichtkraft) auch erhebliche tangentiale Schiebekräfte auf.

Der Federstahlblechstreifen 5 weist eine bogenförmig gekrümmte Dichtungszone 10 auf. Die beiden Längsränder des Federstahlblechstreifens 5 weisen zur selben Seite und liegen als Spannränder 6, 7 parallel aufeinander. Zwischen dem Spannrand 7 und der Dichtzone 10 sind zwei Abwinkelungen 11, 12 von jeweils 90 ° parallel zu den Längsrändem in den Federstahlblechstreifen 5 eingeformt. Dadurch wird am Federstahlblechstreifen 5 eine außerhalb der Spannränder 6, 7 liegende Abstützfläche gebildet, die flächig auf einer entsprechenden Auflagefläche 15 eines Stützelements 8, das im Querschnitt ein L-Profil aufweist, aufliegt und den Federstahlblechstreifen 5 gegen die Dichtkraft in der Schließstellung abstützt. Der vertikale Schenkel dieses L-Profils drückt die beiden Spannränder 6, 7 mittels einer Spannvorrichtung 9 (z.B. Schraubverbindung) gegen das Anlagenteil 2 und fixiert so den Federstahlblechstreifen 5 einseitig an dem Anlagenteil 2. Um beim Einschwenken des Anlagenteils 1 in die Schließstellung ein Abheben des Federstahlblechstreifen 5 im Bereich der Abwinkelung 12 von der Auflagefläche 15 zu verhindern, ist ein V-förmiges Profil 4 als Niederhalter vorgesehen, da im Bereich der Abwinkelung 12 im Inneren des gewölbten Federstahlblechstreifen 5 auf dessen Abstützfläche drückt. Das V-Profil 4 ist über die Klemmverbindung 9 zwischen den Spannrändem 6, 7 fixiert. Der Federstahlblechstreifen 5 ist in Fig. 4 in unverformtem Zustand dargestellt.

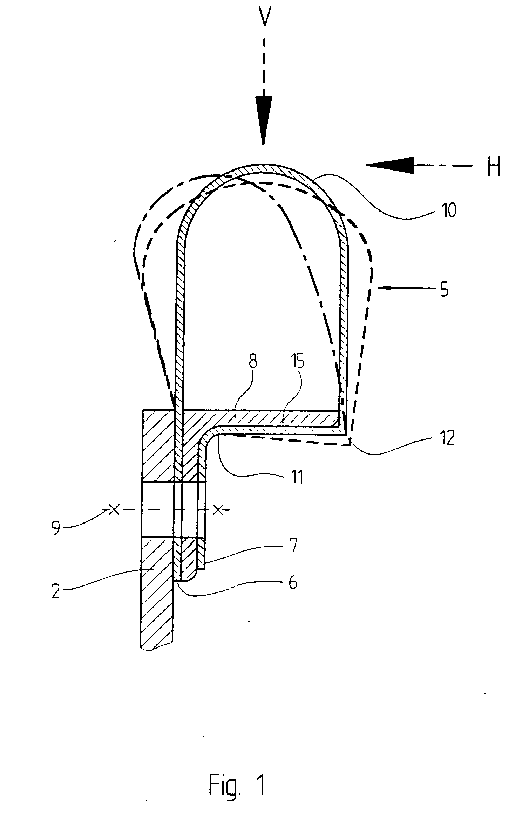

Im Unterschied zum gattungsbildenden Stand der Technik, bei dem in Richtung der Dichtkraft gesehen das Stützelement 8 unterhalb des Dichtungselements 5, also außerhalb des vom Dichtungselement 5 eingeschlossenen Bauraums angeordnet ist, liegt dieses Stützelement 8 in der erfindungsgemäßen Ausführung innerhalb des vom Dichtungselement 5 eingeschlossenen Bauraums. Dies wird in den Fig. 1 bis 3 deutlich, die nachfolgend näher beschrieben werden. Dabei sind für funktionsgleiche Teile dieselben Bezugszeichen verwendet worden wie in Fig. 4.

Die in Fig. 1 im Querschnitt dargestellte Abdichtungsvorrichtung, die mittels einer Schraubverbindung 9 an das bewegte oder unbewegte Anlagenteil 2 einseitig angeklemmt ist, weist ein L-Profil als Stützelement 8 auf. Der vertikale Schenkel des L-Profils ist durch die Schraubverbindung 9 mit dem Anlagenteil 2 fest verbunden. Das aus einem Federstahlblechstreifen 5 gebildete Dichtungselement liegt mit seinem gewölbten Dichtungsbereich 10 über dem anderen (horizontalen) Schenkel des Stützelements 8. Während der Federstahlblechstreifen 5 zwischen der Dichtungszone 10 und dem linken Spannrand 6 völlig glatt ausgeführt ist, weist er in seinem rechten Teil zwischen der Dichtungszone 10 und dem Spannrand 7 zwei Abwinkelungen 11, 12 von vorzugsweise jeweils 90 ° auf. Der Abstand zwischen diesen beiden Abwinkelungen 11, 12 entspricht der Breite der Auflagefläche 15 an der Unterseite des horizontal liegenden Schenkels des Stützelements 8. Im unbelasteten Zustand liegt daher dieser außerhalb der Spannränder 6, 7 liegende Teil (Abstützfläche) des Federstahlblechstreifens 5 vollflächig auf der Auflagefläche 15 auf. In Fig. 1 ist weiterhin qualitativ dargestellt, wie der Federstahlblechstreifen 5 durch eine senkrecht auf die Dichtungszone 10 einwirkende Kraftkomponente V (gestrichelte Linie) oder durch eine tangential zur Dichtungszone 10 gerichtete Kraftkomponente H (strichpunktierte Linie) verformt wird. Diese beiden Kraftkomponenten werden wirksam, wenn die Abdichtungsvorrichtung in ihre Schließstellung gebracht wird. Man erkennt, daß durch die tangentialen Schiebekräfte H beim Schließen kein Abheben des Federstahlblechstreifens 5 von dem Stützelement 8 auftreten kann. Tritt die tangentiale Schiebekraft H in umgekehrter Richtung auf, wie dies beim Öffnen einer Absperrklappe der Fall ist, weicht der Federstahlblechstreifen 5 nach rechts aus, so daß das erforderliche Losbrechmoment deutlich reduziert ist. Nachdem die Absperrklappe aus dem Dichtsitz herausgefahren ist, federt der Federstahlblechstreifen 5 wieder in seine Ausgangsstellung zurück und liegt an der Auflagefläche 15 an. Auf der anderen Seite besitzt die erfindungsgemäße Abdichtungsvorrichtung eine ausreichende Elastizität zur Aufnahme der senkrecht einwirkenden Dichtkräfte V. Um die Steifigkeit gegenüber diesen Dichtkräften im Sonderfall zu erhöhen, kann es zweckmäßig sein, den Federstahlblechstreifen 5 an seiner Unterseite über einen Teilbereich der Auflagefläche 15 mittels eines entsprechend geformten Unterlegelements 14, das ebenfalls durch die Schraubverbindung 9 befestigt werden kann, fest an der Auflagefläche 15 zu halten. Diese Unterlegelemente 14 können durchgehend oder in Abständen angeordnet sein und beispielsweise als entsprechend gebogene Unterlegscheiben ausgeführt sein.

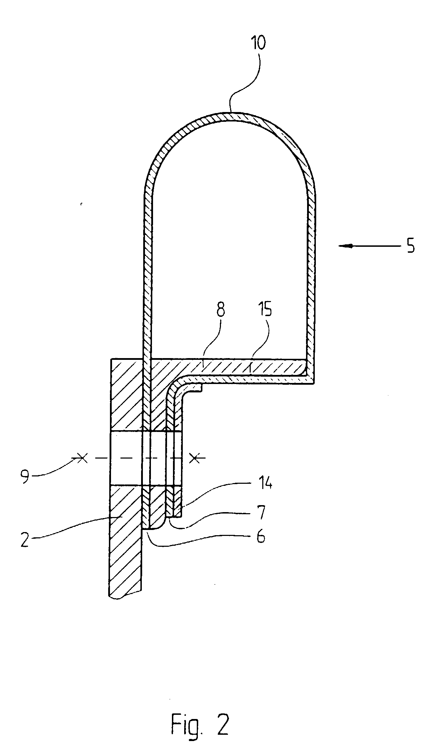

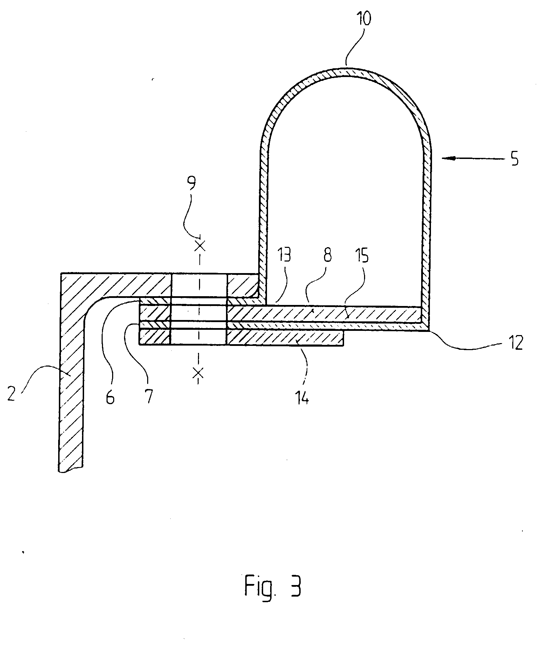

In Fig. 3 ist eine im Prinzip in gleicher Weise wie die Ausführung in Fig. 2 funktionierende erfindungsgemäße Abdichtungsvorrichtung im Querschnitt dargestellt. Der Unterschied liegt lediglich darin, daß anstelle eines L-Profils ein einfacher flacher (ebener) Halteblechstreifen als Stützelement 8 verwendet wird. Gedanklich erhält man Fig. 3 aus der Fig. 2 dadurch, daß der vertikal gezeichnete Profilschenkel des Stützelements 8 um 90 ° im Uhrzeigersinn in die Ebene des anderen Schenkels geschwenkt wird. Hierdurch wird die Abwinkelung 11 eliminiert, und es entsteht zwischen dem Spannrand 6 und der Dichtungszone 10 eine Abwinkelung 13. Verformungstechnisch verhält sich diese Ausführung genauso wie die der Fig. 2 bzw., wenn das Unterlegelement 14 weggelassen wird, wie die Ausführung der Fig. 1.

In Fällen, in denen die abzudichtenden Bereiche eine sehr große Längenausdehnung aufweisen, empfiehlt es sich, die erfindungsgemäße Abdichtungsvorrichtung aus Teilstücken einer Standardlänge (z.B. 1 m) zusammenzusetzen. Die einzelnen Teilstücke werden stimseitig stoßend aneinandergesetzt. Um im Stoßstellenbereich in jedem Fall ein gleichartiges Verhalten der beiden aneinanderstoßenden Enden zu gewährleisten, empfiehlt es sich, ein Ende einer Teillänge jeweils auf der Innen- oder Außenseite mit einem schmalen angehefteten Federstahlblechstreifen zu versehen, damit das korrespondierende Ende des nächsten Teilstücks exakt fluchtend im Sinne einer Steckmuffenverbindung auf- oder eingeschoben werden kann. Es ist zweckmäßig, diesen zusätzlichen Federstahlblechstreifen in der Länge so zu beschränken, daß er außerhalb der Einspannstellen und Abwinkelungen also im wesentlichen nur in dem Bereich der Dichtungszone 10 und den beiden anschließenden Seitenbereichen verläuft. Alternativ könnte ein solcher zusätzlicher Federstahlblechstreifen auch außen über den Stoßstellenbereich der jeweiligen Teilstücke gelegt und entsprechend befestigt werden.

## Patentansprüche

1. Vorrichtung zur Abdichtung zwischen zwei relativ zueinander beweglichen Anlagenteilen (1, 2), insbesondere zwischen zwei Klappenflügeln oder einem Klappenflügel und einem Anschlag einer Rauchgasarmatur, enthaltend ein durch einen Federstahlblechstreifen gebildetes elastisches Dichtungselement (5), das zwei parallel nebeneinander angeordnete, nach der gleichen Seite weisende und mittels einer Klemmeinrichtung (9) an dem einen Anlagenteil (1 oder 2) einseitig befestigbare ebene Spannränder (6, 7) sowie eine bogenförmig gekrümmte Dichtungszone (10) enthält, wobei das Dichtungselement (5) mit einer außerhalb der Spannränder (6, 7) liegenden, durch wenigstens eine Abwinkelung (11,12) zwischen zumindest einem der Spannränder und der Dichtungszone gebildeten Abstützfläche auf der ebenen Auflagefläche (15) eines Stützelementes (8) flächig aufliegt und das Stützelement (8) ebenfalls mittels der Klemmeinrichtung (9) mit dem einen Anlagenteil (1 oder 2) befestigbar ist und wobei der andere Anlagenteil (2 bzw. 1) im Scheitelbereich der bogenförmig gekrümmten Dichtungszone (10) mit dem Dichtungselement (5) in Berührung kommt und die Relativbewegung zwischen beiden Anlagenteilen (1, 2) etwa tangential zu diesem Scheitelbereich erfolgt,
dadurch gekennzeichnet,
daß das Stützelement (8) innerhalb des von dem gebogenen Dichtungselement (5) eingeschlossenen Raums angeordnet ist.

2. Vorrichtung nach Anspruch 1,
dadurch gekennzeichnet,
daß außerhalb der Dichtungszone (10) in Längsrichtung des Dichtungselements (5) zwei Abwinkelungen (11, 12 bzw. 13) vorgesehen sind und die Innenseite des Dichtungselements (5) im Bereich zwischen der einen Abwinkelung (12) und dem zugeordneten Spannrand (7) auf der Unterseite (Auflagefläche 15) des Stützelements (8) flächig aufliegt.

3. Vorrichtung nach Anspruch 2,
dadurch gekennzeichnet,
daß die beiden Abwinkelungen (11, 12) auf derselben Seite des Dichtungselements (5) zwischen der Dichtungszone (10) und dem entsprechenden Spannrand (7) in einem der Breite der Auflagefläche (15) des Stützelements (8) entsprechenden Abstand angeordnet sind.

4. Vorrichtung nach Anspruch 3,
dadurch gekennzeichnet,
daß das Stützelement (8) als L-Profil ausgebildet ist, wobei die Innenseite des ersten Schenkels des L-Profils die Auflagefläche (15) bildet und der zweite Schenkel des L-Profils die beiden Spannränder (6, 7) mittels der Klemmeinrichtung (9) auf das Anlagenteil (2) spannt.

5. Vorrichtung nach Anspruch 2,
dadurch gekennzeichnet,
daß das Stützelement (8) als flacher Halteblechstreifen ausgebildet ist, daß die beiden Abwinkelungen (12, 13) bezüglich der Dichtungszone (10) auf sich gegenüberliegenden Seiten des Dichtungselements (5) angeordnet sind, und daß der Halteblechstreifen die beiden Spannränder (6, 7) mittels der Klemmeinrichtung (9) auf das Anlagenteil (2) spannt, wobei das Stützelement (8) bis zur einen Abwinkelung (12) reicht.

6. Vorrichtung nach einem der Ansprüche 1 bis 5,
dadurch gekennzeichnet,
daß das Dichtungselement (5) über einen Teil der Breite der Auflagefläche (15) des Stützelements (8) mittels eines Unterlegelements (14) fest auf der Rückseite der Auflagefläche (15) des Stützelements (8) gehalten wird.

7. Vorrichtung nach einem der Ansprüche 1 bis 6,
dadurch gekennzeichnet,
daß das Dichtungselement (5) aus stumpf aneinanderstoßenden Teilstücken zusammengesetzt ist und der Stoßstellenbereich jeweils von einer Einschiebemuffe aus einem Federstahlblechstreifen überdeckt wird.

## Claims

1. A device for providing a seal between two plant components (1, 2) movable relative to one another, in particular between two valve leaves or a valve leaf and a limit stop for a flue gas fitting, comprising a resilient sealing element (5) which is formed of a spring steel strip and comprises, together with an arcuately curved sealing zone (10), two flat anchoring edges (6, 7) arranged in parallel next to each other, directed towards the same side and attachable on one side of the one plant component (1 or 2) by means of a clamping device (9), the sealing element (5) resting flat on the flat bearing surface (15) of a supporting member (8) via a supporting face located externally of the anchoring edges (6, 7) and formed of at least one bend (11, 12) between at least one of the anchoring edges and the sealing zone and the supporting member (8) likewise being attachable to the one plant component (1 or 2) by means of the clamping device (9) and the other plant component (2 or 1) coming into contact with the sealing element (5) in the apex area of the arcuately curved sealing zone (10) and the relative movement between the two plant components (1, 2) occurring approximately tangentially to this apex area,
characterised in that
the supporting member (8) is arranged inside the space enclosed by the curved sealing element (5).

2. A device according to claim 1,
characterised in that
two bends (11, 12 or 13) are provided externally of the sealing zone (10) in the longitudinal direction of the sealing element (5) and the inside of the sealing element (5) rests flat on the underside (bearing surface 15) of the supporting member (8) in the area between the one bend (12) and the associated anchoring edge (7).

3. A device according to claim 2,
characterised in that
the two bends (11, 12) are arranged on the same side of the sealing element (5) between the sealing zone (10) and the corresponding anchoring edge (7) at a distance corresponding to the width of the bearing surface (15) of the supporting element (8).

4. A device according to claim 3,
characterised in that
the supporting element (8) takes the form of an L-shaped profile, the inside of the first leg of the L-shaped profile forming the bearing surface (15) and the second leg of the L-shaped profile anchoring the two anchoring edges (6, 7) to the plant component (2) by means of the clamping device (9).

5. A device according to claim 2,
characterised in that
the supporting element (8) takes the form of a flat retaining strip, in that the two bends (12, 13) are arranged on opposing sides of the sealing element (5) relative to the sealing zone (10), and in that the retaining strip anchors the two anchoring edges (6, 7) to the plant component (2) by means of the clamping device (9), the supporting element (8) extending as far as one bend (12).

6. A device according to any one of claims 1 to 5,
characterised in that
the sealing element (5) is secured to the rear of the bearing surface (15) of the supporting element (8) over part of the width of the bearing surface (15) of the supporting member (8) by means of a backing member (14).

7. A device according to any one of claims 1 to 6,
characterised in that
the sealing element (5) is composed of mutually abutting sections and each abutment joint area is overlapped by a plug-in sleeve consisting of a spring steel strip.

## Revendications

1. Dispositif d'étanchéification entre deux pièces (1, 2) mobiles l'une par rapport à l'autre, notamment entre deux ailes de clapet ou entre une aile de clapet et une butée d'un accessoire de conduit pour gaz de fumée, contenant un élément formant joint (5) élastique qui est formé par un ruban de tôle d'acier à ressorts et qui contient deux bords de fixation (6, 7) plats, agencés parallèlement l'un à côté de l'autre, dirigés vers le même côté et pouvant être fixés d'un côté à l'une des pièces (1 ou 2) au moyen d'un dispositif de serrage (9), ainsi qu'une zone d'étanchéification (10) courbée en forme d'arc, l'élément formant joint (5) étant appuyé sur la surface d'appui (15) d'un élément de soutien (8) par sa surface d'appui qui se trouve à l'extérieur des bords de fixation (6, 7) et qui est formée par au moins un coude (11, 12) entre au moins l'un des bords de fixation et la zone d'étanchéification, l'élément de soutien (8) pouvant également être fixé à la pièce (1 ou 2) au moyen du dispositif de serrage (9), l'autre pièce (2 ou 1) venant en contact avec l'élément formant joint (5) dans la zone de rebroussement de la zone d'étanchéification (10) courbée en arc, le mouvement relatif entre les deux pièces (1, 2) s'effectuant sensiblement tangentiellement à cette zone de rebroussement,
caractérisé en ce que
l'élément de soutien (8) est agencé à l'intérieur de l'espace inclus par l'élément formant joint (5) courbé.

2. Dispositif selon la revendication 1,
caractérisé en ce que
il est prévu deux coudes (11, 12 ou 13) en dehors de la zone d'étanchéificaticn (10) dans le sens de la longueur de l'élément formant joint (5) et en ce que le côté intérieur de l'élément formant joint (5), dans la zone entre l'un des coudes (12) et le bord de fixation (7) associé, est appuyé par sa surface contre la face inférieure (surface d'appui 15) de l'élément de soutien (8).

3. Dispositif selon la revendication 2,
caractérisé en ce que
les deux coudes (11, 12) sont agencés du même côté de l'élément formant joint (5) entre la zone d'étanchéification (10) et le bord de fixation correspondant (7) à une distance correspondant à la largeur de la surface d'appui (15) de l'élément de soutien (8).

4. Dispositif selon la revendication 3,
caractérisé en ce que
l'élément de soutien (8) est conçu comme un profilé en L, le côté intérieur de la première branche du profilé en L formant la surface d'appui (15) et la deuxième branche du profilé en L tenant les deux bords de fixation (6, 7) sur la pièce (2) au moyen du dispositif de serrage (9).

5. Dispositif selon la revendication 2,
caractérisé en ce que
l'élément de soutien (8) est conçu comme un ruban de tôle de retenue plat, les deux coudes (12, 13) sont agencés par rapport à la zone d'étanchéification (10) sur des côtés qui se font face de l'élément formant joint (5) et le ruban de tôle de retenue tient les deux bords de fixation (6, 7) sur la pièce (2) au moyen du dispcsitif de serrage (9), l'élément de soutien (8) allant jusqu'au coude (12).

6. Dispositif selon l'une des revendications 1 à 5,
caractérisé en ce que
l'élément formant joint (5), sur une partie de la largeur de la surface d'appui (15) de l'élément de soutien (8), est maintenu fixement au moyen d'un élément de calage (14) sur l'arrière de la surface d'appui (15) de l'élément de soutien (8).

7. Dispositif selon l'une des revendications 1 à 6,
caractérisé en ce que
l'élément formant joint (5) est assemblé à partir de pièces partielles mises bout à bout et la zone de jointure est recouverte à chaque fois par un manchon à emboîter construit en un ruban de tôle d'acier à ressorts.
